# EUROPÄISCHE PATENTSCHRIFT

(11) **EP 3 586 159 B1**
(45) Veröffentlichungstag und Bekanntmachung des Hinweises auf die Patenterteilung: **12.11.2025**
(21) Anmeldenummer: 18707353.1
(22) Anmeldetag: 23.02.2018
(51) Int. Cl.: G01S 7/41, G01S 13/931, G01S 7/02, G01S 13/46, G01S 13/42

(54) **VERFAHREN ZUR OBJEKTKLASSIFIKATION MIT POLARIMETRISCHEN RADARDATEN UND GEEIGNETE VORRICHTUNG HIERFÜR**
METHOD FOR OBJECT CLASSIFICATION USING POLARIMETRIC RADAR DATA AND DEVICE SUITABLE THEREFOR
PROCÉDÉ SERVANT À CLASSER DES OBJETS AVEC DES DONNÉES RADAR POLARIMÉTRIQUES ET DISPOSITIF ADAPTÉ À CET EFFET

(30) Priorität: 24.02.2017 DE 102017203057; 30.03.2017 DE 102017205455; 28.06.2017 DE 102017210964
(43) Veröffentlichungstag der Anmeldung: 01.01.2020
(73) Patentinhaber: Cruise Munich GmbH, 85521 Ottobrunn (DE)
(72) Erfinder: TRUMMER, Stefan, 82041 Oberhaching (DE)
(74) Vertreter: Manitz Finsterwald Patent- und Rechtsanwaltspartnerschaft mbB
(86) Internationale Anmeldenummer: PCT/EP2018/054548
(87) Internationale Veröffentlichungsnummer: WO 2018/154066

(56) Entgegenhaltungen:
- DE-A1- 102013 102 424
- DE-A1- 102015 208 901
- GB-A- 2 523 092
- JP-A- 2011 154 610

## Beschreibung

Die vorliegende Erfindung bezieht sich auf ein Verfahren zur Objektklassifizierung mit polarimetrischen Radardaten und geeignete Vorrichtung hierfür.

Es ist allgemein bekannt, Radare mit linearpolarisierten Signalen für eine Objektklassifikation heranzuziehen. Die hierbei zu erzielenden Resultate sind beispielsweise bei aufgenommenen Radarbildern nicht eindeutig bzw. hinsichtlich verschiedener Objekte mehrdeutig. Beispielsweise beschreibt die DE 10 2013 102 424 A1 ein polarimetrisches Radar bestehend aus einer Sendeanordnung, die zirkular polarisierte Wellen über Sendeantennen abstrahlt, und einer Empfängeranordnung, die die reflektierten zirkular polarisierten Wellenanteile über eine Antennenanordnung empfängt, sodass mehrere Zweikanalempfänger als Empfängeranordnung vorgesehen sind, die gleichzeitig links- und rechtsdrehende, zirkular polarisierte Signalanteile empfangen, die für eine der Antennenanordnung nachgeschaltete digitale Strahlformung vorgesehenen sind.

Es ist deshalb eine Aufgabe der vorliegenden Erfindung, ein Verfahren zur Objektklassifikation und eine geeignete Vorrichtung hierfür zu schaffe, welches die im Stand der Technik vorhandenen Nachteile vermindert. Es ist ferner eine Aufgabe der vorliegenden Erfindung, die Zuordnung bei der Objektklassifikation zu erhöhen und ferner gegebenenfalls Daten zur Verfügung zu stellen, die einer weiteren vielfältigen Anwendungsmöglichkeit herangezogen werden können.

Gelöst werden die genannten Aufgabenstellungen verfahrenstechnisch mit den Merkmalen des Anspruchs 1 und vorrichtungstechnisch mit den Merkmalen des Anspruchs 8.

Hierbei zeigt es sich, dass durch die Bereitstellung eines elliptisch oder zirkularpolarisierten Sendesignals, welches auf das zu klassifizierende Objekt gesendet wird, entsprechend unterschiedliche Reflektionssignale herangezogen werden, um unterschiedliche Radarbilder zu erzeugen, welche dann verglichen werden können. Mit dieser Maßnahme wird erreicht,
dass hervortretende Objektbereiche unterschieden werden können und somit eine verbesserte Objektklassifikation herbeigeführt werden kann.

Das anmeldungsgemäße Verfahren und die anmeldungsgemäße Vorrichtung kann somit bei zukünftigen Radarsensoren verwendet werden, die insbesondere bei hochautomatisierten und autonomen Fahren angewendet werden können.

Hierfür sind polarimetrische Radarsensoren notwendig, die sich insbesondere dadurch auszeichnen, dass man mit ihnen im Vergleich zu aktuell verwendeten Radaren mit linear polarisierten Signalen deutlich mehr Zielinformationen generieren kann. Dies ist darin begründet, dass man für die Ko- und Kreuzpolarisation voneinander unabhängige Radarbilder generieren kann und eine höhere Zieldetektionswahrscheinlichkeit bei zirkularer Polarisation vorhanden ist.

Beim erfindungsgemäßen Verfahren handelt es sich um die Auswertung polarimetrischer Radardaten hinsichtlich der Mustererkennung zur Klassifizierung verschiedener Objekte, sowie um die Erkennung von sogenannten "Geisterziele". Diese werden durch Mehrwegausbreitungen, Nebenkeulen und durch periodisch wiederkehrende Hauptkeulen (sog. Grating-Lobes) verursacht.

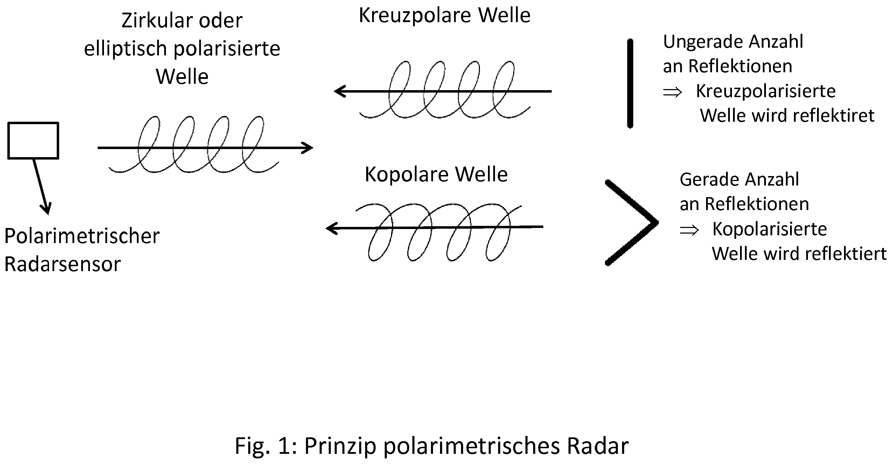

Das anmeldungsgemäße physikalische Prinzip zeigt Fig. 1. Es wird eine zirkulare oder elliptisch polarisierte Welle abgesendet und man empfängt abhängig von der Struktur des Ziels eine hauptsächlich kreuzpolarisierte Welle oder eine hauptsächlich kopolarisierte Welle. Bei einer ungeradzahligen Anzahl an Reflektionen am Ziel dreht die Polarisationsrichtung und bei einer geradzahligen Anzahl an Reflektionen erhält man die gleiche Polarisation zurück. Sendet man z.B. mit einer linkszirkularen Welle, dann ist die Kreuzpolarisation eine rechtszirkulare Welle und die Kopolarisation eine linkszirkulare Welle. Eine Beschreibung dieses Prinzips und des Aufbaus eines polarimetrischen Radarsensors befindet sich in [1].

Damit dieses Prinzip umgesetzt werden kann, benötigt man einen Sender, der mindestens eine linkszirkulare oder rechtszirkulare oder elliptische Polarisation absendet. Der Empfänger muss dabei voll polarimetrisch sein. Das bedeutet, dass zirkulare, elliptische und lineare Polarisationen empfangen werden können. Dies kann durch den Empfang von linkszirkularen und rechtszirkularen Anteilen des Empfangssignals realisiert werden. Alle Polarisationen können dann über das Verhältnis der links- und rechtzirkularen Anteile dargestellt werden. Eine weitere Möglichkeit voll polarimetrisch zu empfangen, ist der Empfang von vertikal und horizontal linear polarisierten Anteilen des Empfangssignals. Damit alle Polarisationen dargestellt werden können, müssen hierbei der Betrag und die Phase von den vertikal linear und horizontal linear polarisierten Anteilen des Empfangssignals ausgewertet werden.

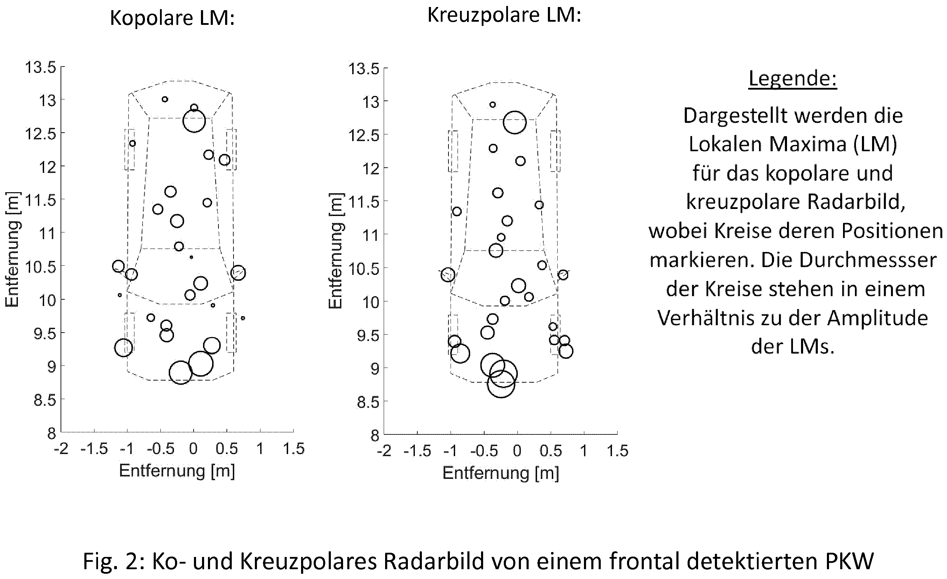

Fig. 2 zeigt das Ergebnis einer zirkular polarimetrischen Messung am Beispiel eines PKWs. Man erhält zwei unabhängige Radarbilder, ein kopolares Radarbild und ein kreuzpolares Radarbild. Im kopolaren Radarbild sind geradzahlige Reflektionen am Ziel dargestellt, hauptsächlich Doppelreflektionen. Im kreuzpolaren Radarbild sind ungeradzahlige Reflektionen am Ziel dargestellt, hauptsächlich Einzelreflektionen. Dabei werden in beiden Fällen lokale Maxima der Amplituden des zurückreflektierten Signals mit Kreisen dargestellt, deren Durchmesser in einem Verhältnis zu deren Amplitude steht.

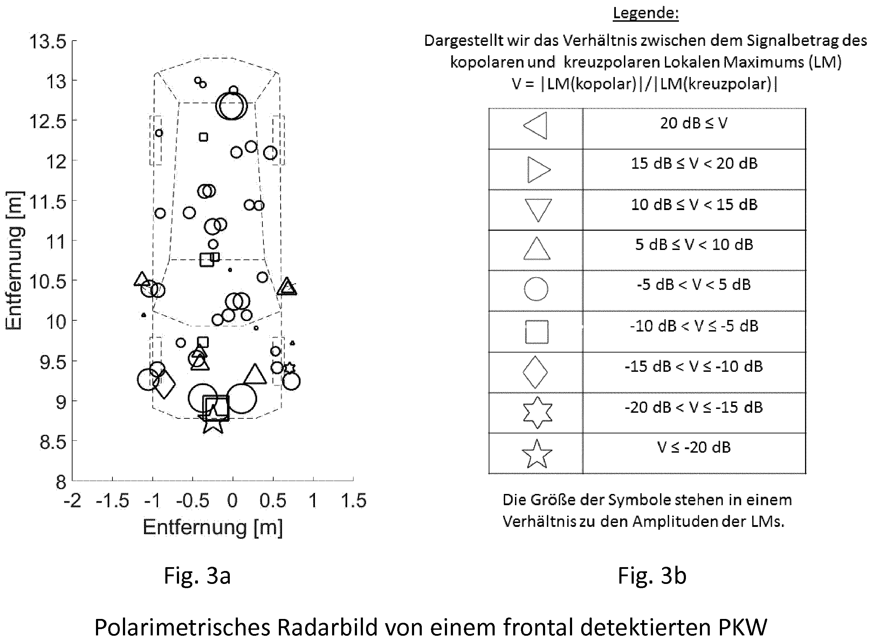

Fig. 3a und Fig. 3b zeigen ein polarimetrisches Radarbild, das sowohl die kopolaren als auch die kreuzpolaren Lokalen Maxima aus Fig. 2 beinhalten. Allerdings wird nun zusätzlich für jedes lokale Maxima das Betragsverhältnis zwischen ko- und kreuzpolarisierten Signalanteil (im Folgenden "Ratio" genannt) in Form von verschiedenen Symbolen dargestellt. Dadurch entsteht an verschiedenen Bereichen des PKWs ein polarimetrisches Muster, mit dem man Objekte klassifizieren kann.

Bei Mustererkennungen für verschiedene Bereiche der Ziele werden folgende Eigenschaften der lokalen Maxima ausgewertet:
- Anzahl der kopolaren Maxima, hierbei können auch bestimmte Störabstände (Abstand zum Rauschniveau) einbezogen werden
- Anzahl der kreuzpolaren Maxima, hierbei können auch bestimmte Störabstände (Abstand zum Rauschniveau) einbezogen werden
- Durchschnittliches Betragsverhältnis zwischen Ko- und Kreuzpolarisation
- Maximales Betragsverhältnis zwischen Ko- und Kreuzpolarisation
- Minimales Betragsverhältnis zwischen Ko- und Kreuzpolarisation
- Phasenverhältnisse zwischen Ko- und Kreuzpolarisation
- Besonders charakteristische Eigenschaften

Letzteres ist z.B. die erste Reflektion am PKW im Bereich des vorderen Nummernschildes. Diese besitzt ein Ratio von kleiner -20 dB.

Die Musterklassifikation unterscheidet hierbei verschiedene Objekttypen wie z.B. PKWs, Fußgänger, Radfahrer, LKWs und Motorradfahrer und straßenbauliche Ziele wie z.B. Gullys, Absperrungen, Leitplanken Brücken und Tunnels.

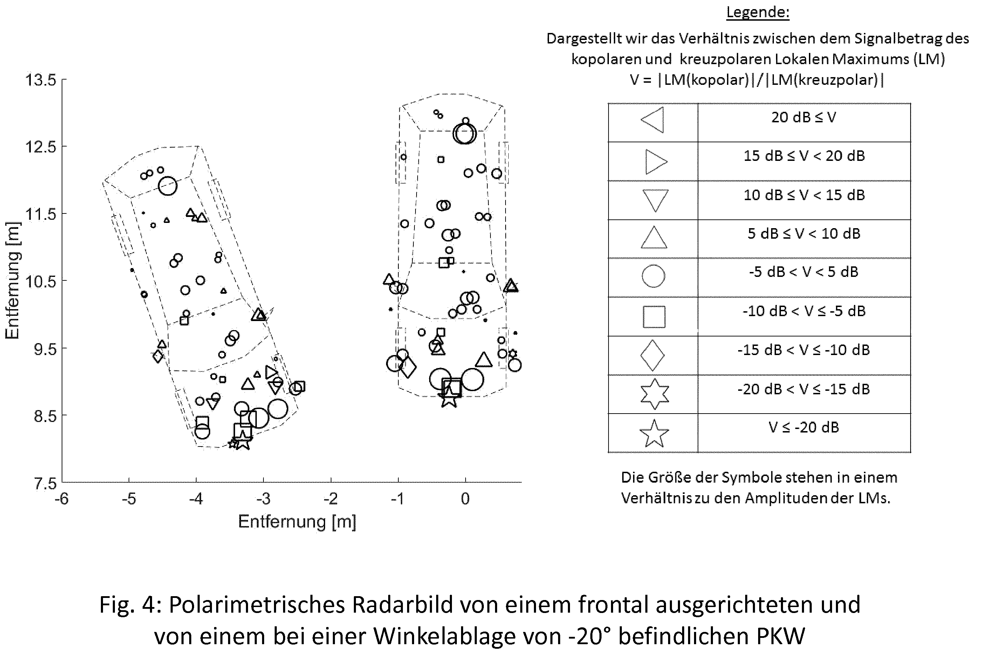

Fig. 4 zeigt den PKW frontal gemessen und bei einer Winkelablage von -20°. Bei der Winkelablage von -20° ist folgende Veränderung bezogen auf den frontal gemessenen PKW festzustellen:
- Die charakteristische Reflektion an der Front mit dem Ratio kleiner als -20 dB verschiebt sich zur rechten Seite des PKWs
- Im Bereich der Front treten Reflektionen auf, mit Ratiowerten zwischen 10dB und 15dB, als auch eine Reflektion mit einem Ratio zwischen 15dB und 20 dB.
   (Dies ist in den stärken kopolaren Eigenschaften begründet. Diese entstehen dadurch, dass es durch das schräg stehende Fahrzeug mehr Doppelreflektionen im Bereich der Front insbesondere im Bereich des Autogrills gibt)
- Es ergibt sich eine Veränderung des polarimetrischen Musters vor allem im Bereich der Front, des Lenkrads und im hinteren Bereich des Fahrzeuges

Anhang dieser Eigenschaften kann festgestellt werden in welchem Winkel sich das Fahrzeug zum Sensor befindet.

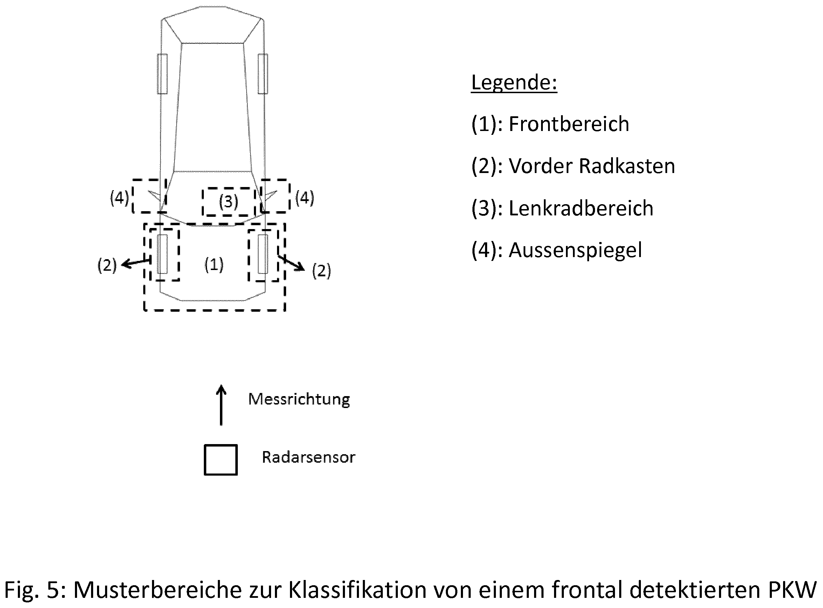

Fig. 5 zeigt Bereiche, die bei der Mustererkennung und der Klassifizierung von einem frontal gemessenen PKW von besonderer Bedeutung sind. Diese sind:
- Frontbereich
- Vordere Radkästen
- Lenkradbereich
- Außenspiegel

Charakteristisch ist hierbei entsprechend Fig. 3, eine starke Reflektion im Bereich des vorderen Nummernschildes mit einem sehr geringen Ratio (starke Einfachreflektion).

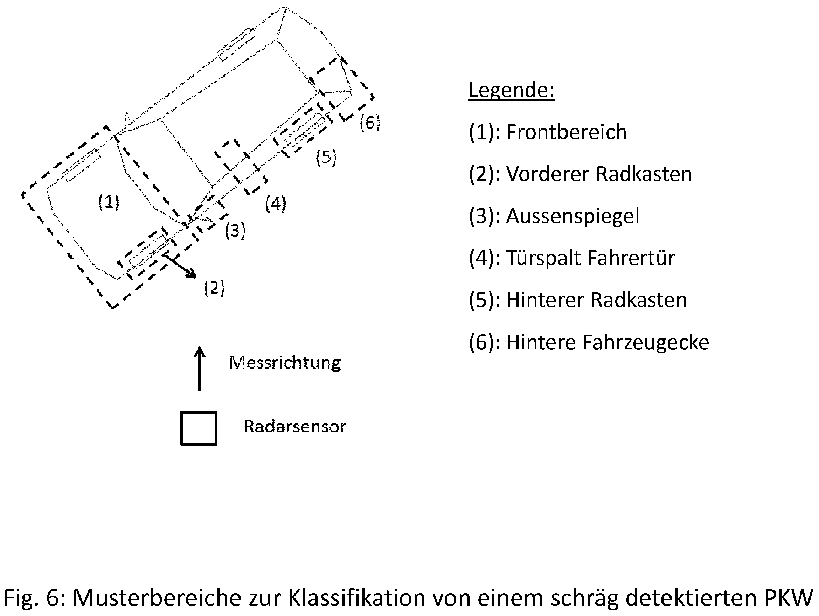

Fig. 6 zeigt Bereiche, die bei der Mustererkennung und der Klassifizierung von einem schräg detektierten PKW von besonderer Bedeutung sind:
- Frontbereich
- die zum Sensor ausgerichteten Radkästen
- der zum Sensor ausgerichtete Außenspiegel
- der zum Sensor ausgerichtete vordere Türspalt
- die zum Sensor ausgerichtete hintere Fahrzeugecke

Besonders charakteristisch ist hierbei die Detektion der Kontur des Fahrzeugs als L-Form, die exakte Positionserkennung der Radkästen, sowie das Auftreten verhältnismäßig (im Vergleich zu den anderen Messpositionen) vieler Signale mit einem hohen Ratio (Doppelreflektionen).

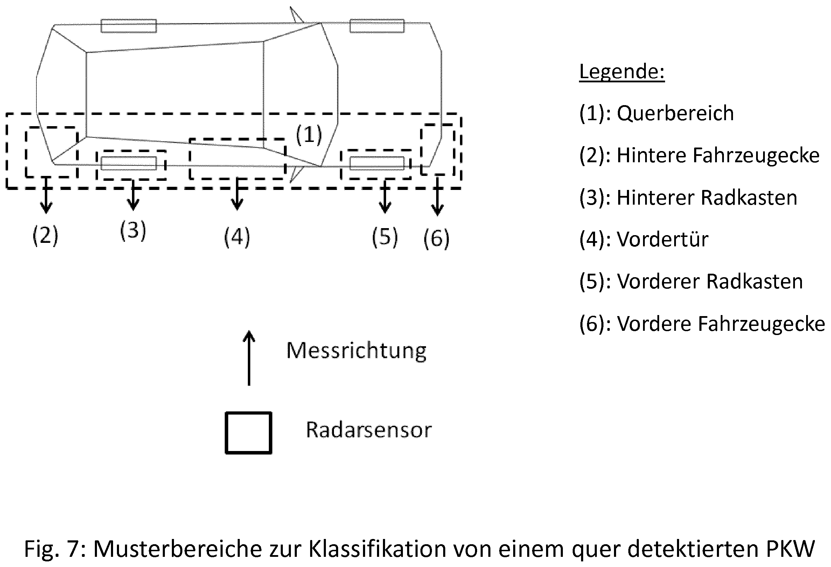

Fig. 7 zeigt Bereiche, die bei der Mustererkennung und der Klassifizierung von einem quer detektierten PKW von besonderer Bedeutung sind:
- der zum Sensor ausgerichtete Querberiech
- die zum Sensor ausgerichteten Radkästen
- die zum Sensor ausgerichteten Fahrzeugecken
- die zum Sensor ausgerichteten Vordertür

Besonders charakteristisch ist hierbei die Detektion von starken Reflektionen mir sehr geringem Ratio (starke Einfachreflektionen) im Bereich der Vordertür.

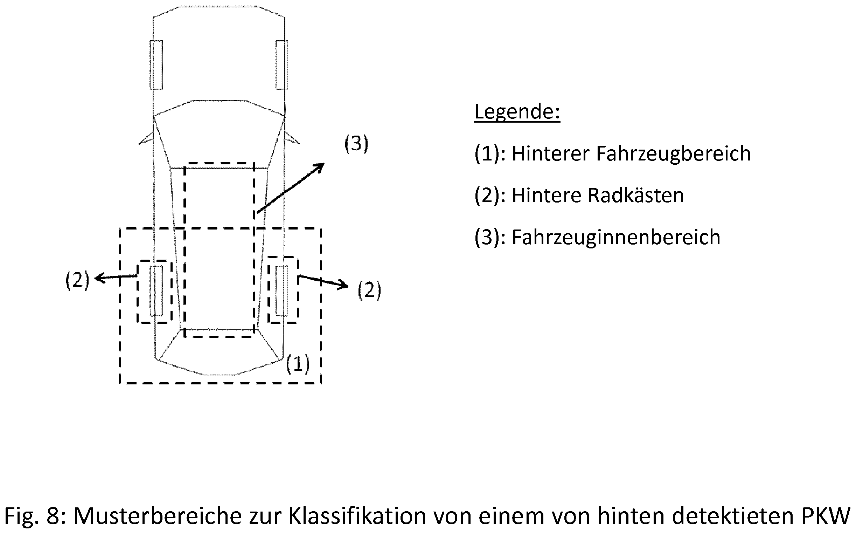

Fig. 8 zeigt Bereiche, die bei der Mustererkennung und der Klassifizierung von einem von hinten detektierten PKW von besonderer Bedeutung sind:
- Hintere Fahrzeugbereich
- die zum Sensor ausgerichteten Fahrzeugecken
- die zum Sensor ausgerichteten Vordertür

Besonders charakteristisch ist hierbei die Detektion von einer starken Reflektion mir sehr geringem Ratio (starke Einfachreflektionen) an der Außenkontur des Hecks, sowie ein polarimetrisches Muster, das vom Innenraum des PKWs stammt.

Typische polarimetrische Muster mit den beschriebenen Eigenschaften von Objektklassen bzw. Objektunterklassen werden dabei stets verschiedenen Winkel- und Entfernungsbereiche zugeordnet und dienen als Basis für einen Klassifizierungsalgorithmus.

Des Weiteren ergeben sich Vorteile bei der Verwendung zirkularer Polarisation bei der Erkennung durch "Geisterziele", die durch Mehrwegausbreitungen oder durch Nebenkeulen oder störende wiederkehrende Hauptkeulen entstehen. Die beiden Letzteren sind besonders stark ausgeprägt, wenn starke Ziele bei starken Winkelablagen detektiert werden.

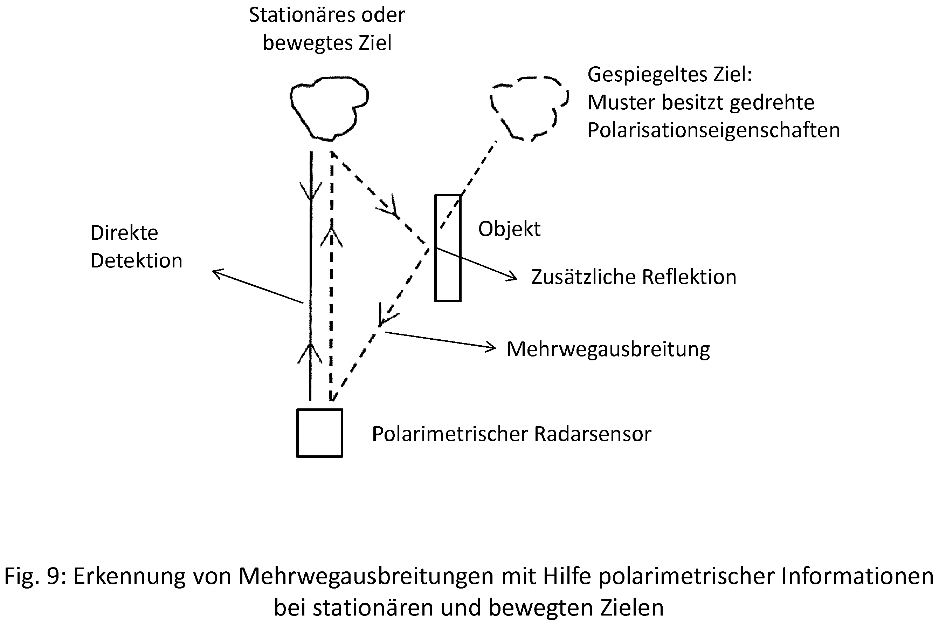

Fig. 9 zeigt beispielshaft die Situation bei einer Mehrwegausbreitung bedingt durch eine zusätzliche Reflektion an einem Objekt. Dadurch entsteht ein gespiegeltes Ziel, dass sich bei einem anderen Winkel befindet. Allerdings verursacht die zusätzliche Reflektion auch eine Drehung der Polarisationseigenschaften, sodass die Analyse des veränderten Polarisationsmusters eine Identifizierung von Mehrwegausbreitungen ermöglicht.

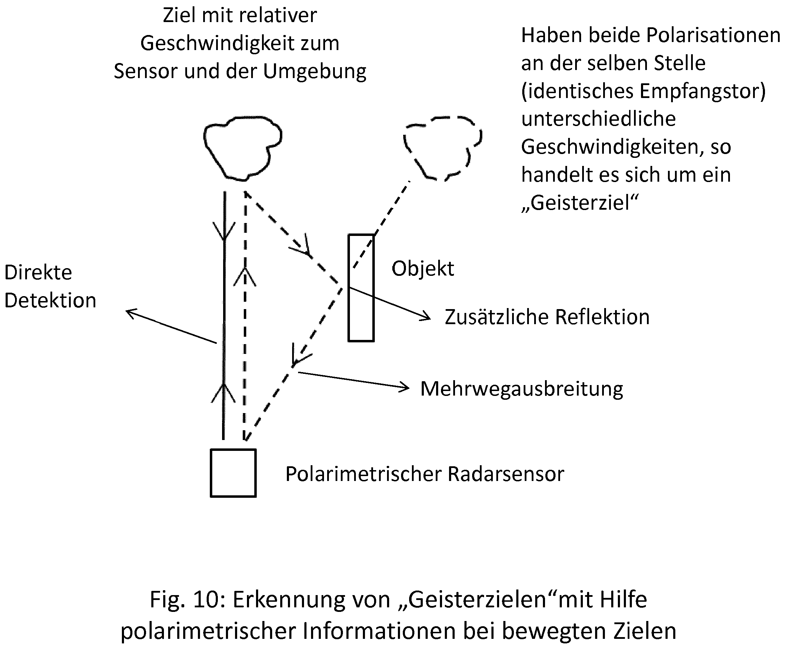

Fig. 10 zeigt die gleiche Situation wie in Fig. 9 bezieht sich aber ausschließlich auf Ziele mit einer relativen Geschwindigkeit zum Radarsensor und der Umgebung. Wenn nun bei Zielen innerhalb von einem Entfernungs- und Winkeltor ein lokales Maximum unterschiedliche Geschwindigkeiten im kopolaren Signal und im kreuzpolaren Signal aufweist, dann handelt es sich um ein "Geisterziel". Diese können dabei sowohl durch Mehrwegausbreitung, als auch durch Nebenkeulen oder wiederkehrende Hauptkeulen verursacht werden.

Bei Radarsensoren, die zirkular polarimetrische oder elliptische Wellen aussenden, können die zurückreflektierten Signale in einen links- und in einen rechtsdrehenden Anteil zerlegt werden. Dadurch erhält man ein polarimetrisches Muster, das für eine Objektklassifikation verwendet werden kann. Damit der linksdrehende und der rechtsdrehende Anteil empfangen werden können, ist es eine naheliegende Umsetzung für beide Polarisationen entsprechende Empfangskanäle vorzusehen. Dadurch entsteht jedoch ein signifikanter Nachteil. Man benötigt verglichen mit einem linearen Radarsystem für die gleiche Winkelauflösung die doppelte Anzahl an Empfangskanälen.

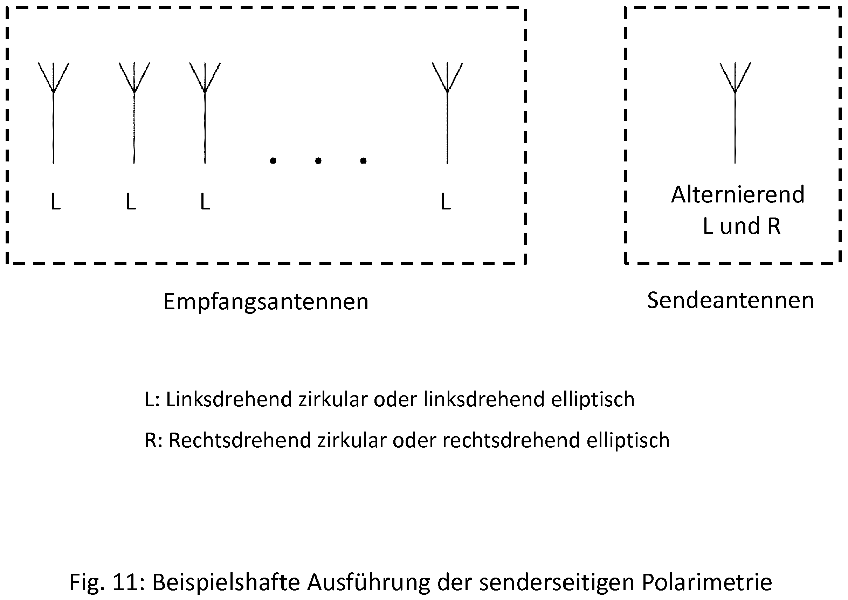

Ein Lösungsansatz ohne diesen Nachteil ergibt sich aus dem erfindungsgemäßen Verfahren. Man sendet dabei links- und rechtsdrehende Wellen abwechselnd nacheinander und empfängt nur eine Polarisationsrichtung. Wenn man z.B. linksdrehende Signale empfängt erhält man beim Aussenden der linksdrehenden Welle die kopolaren Signalanteile und danach beim Aussenden der rechtsdrehenden Welle die kreuzpolaren Signalanteile. Fig. 11 veranschaulicht die erfindungsgemäße Methode.

Bei Verwendung mehrerer Sender ist es ein naheliegender Lösungsansatz die Sender zeitlich nacheinander zu betreiben und die zeitlich versetzten Empfangssignale in der Signalauswertung entsprechend zu berücksichtigen. Aufgrund der langen Sendedauer ergibt sich jedoch ein signifikanter Nachteil. Bei einer sehr langen Beobachtungsdauer erhält man eine sehr gute Geschwindigkeitsauflösung, jedoch können große Geschwindigkeiten nicht mehr eindeutig bestimmt werden.

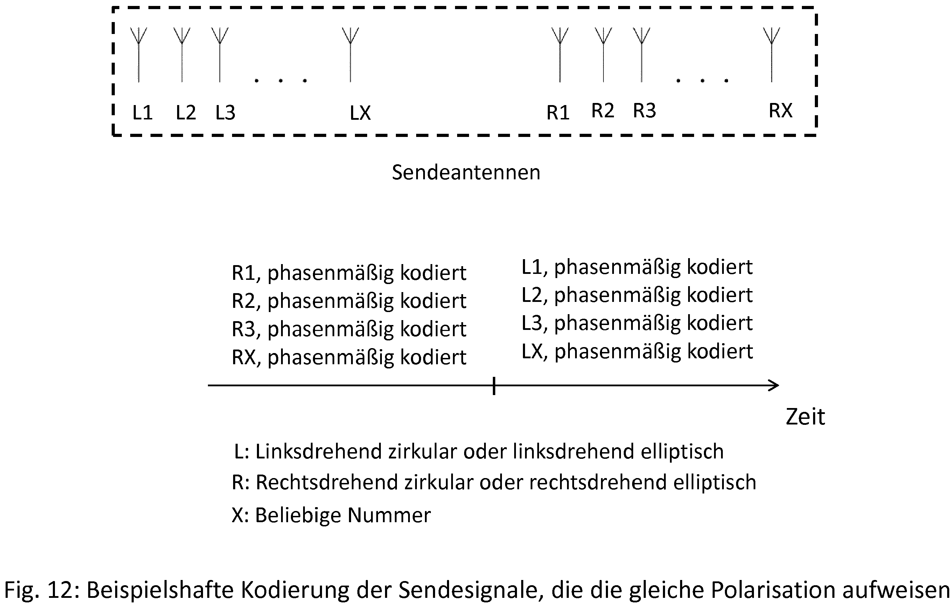

Ein Lösungsansatz bietet dabei das erfindungsgemäße Verfahren. Es werden mehrere Sender gleichzeitig betrieben und diese einzeln phasenmäßig kodiert, wobei die gleichzeitig betriebenen Sender immer die gleiche Polarisation aufweisen. So werden zuerst z.B. gleichzeitig alle linksdrehend polarisierten Sendesignale phasenmäßig kodiert ausgesendet und danach zeitlich versetzt alle rechtsdrehend polarisierten Sendesignale phasenmäßig kodiert ausgesendet. Generell kann die Phasenkodierung unterschiedliche Längen aufweisen. Fig. 12 veranschaulicht die erfindungsgemäße Methode.

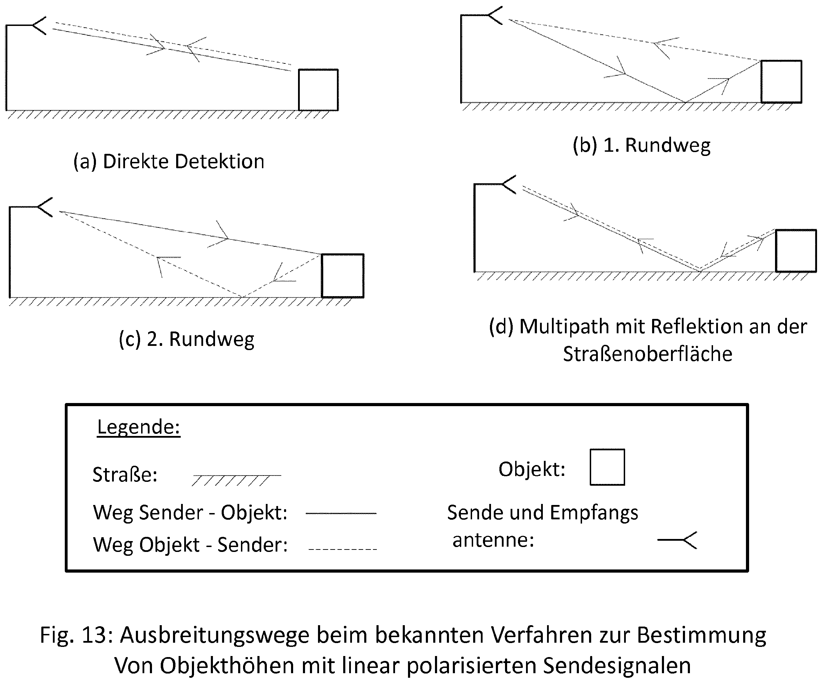

Bei der Messung von Objekthöhen bei großen Entfernungsabständen gibt es ein bekanntes Verfahren, das sich auf Radargeräte, die linear polarisierte Signale aussenden, bezieht. Bei Messung von auf der Straße befindlichen Objekten erfolgt dabei eine Signalüberlagerung, die durch verschiedene Ausbreitungswege verursacht wird. Es überlagert sich dabei die direkte Detektion mit einer Mehrwegeausbreitung bestehend aus einer zusätzlichen Reflektion an der Straßenoberfläche und zwei sogenannten Rundwegen. Unter Rundweg versteht man, dass sich Hinweg und Rückweg voneinander unterscheiden. So ist im ersten Rundwegfall der Hinweg der direkte Weg und der Rückweg beinhaltet die Straßenreflektion. Im zweiten Rundwegfall beinhaltet der Hinweg die Straßenreflektion und der Rückweg ist der direkte Weg. Durch die Überlagerung der verschiedenen Wegeausbreitungen erhält man ein Empfangssignal, bestehend aus einer Überlagerung der zurückreflektierten Signale der einzelnen Ausbreitungswege. Somit weist das Empfangssignal einen objektabhängigen charakteristischen Verlauf über der Entfernung auf, der je nach Objektentfernung durch teils konstruktiver und teils destruktiver Überlagerung der verschiedenen Signale bestimmt wird. Wenn man Objekte, die eine relative Geschwindigkeit zum Sensor aufweisen, mittels eines Trackers über der Entfernung verfolgt, kann man bei der Detektion von zumindest zwei charakteristischen Merkmalen, wie z.B. zwei Minima des Empfangssignals, die Höhe des Objektes bestimmen. Allerdings gibt es im linearen Fall einen signifikanten Nachteil. Aufgrund der Überlagerung von vier verschiedenen Ausbreitungswegen, ergibt sich eine charakteristische Kennlinie, deren Minima lokal sehr stark ausgeprägt sind. Da bei großen Entfernungen die zurückreflektierte Signalamplitude generell einen geringen Abstand zum Rauschlevel aufweist, kommt es im linearen Fall dazu, dass bei bestimmten Entfernung das Ziel nicht mehr detektiert werden kann, da sich das Empfangssignal unterhalb des Rauschniveaus befindet. Fig. 13 skizziert die auftretenden Ausbreitungswege beim bekannten Verfahren, das sich auf linear polarisierte Sendesignale bezieht.

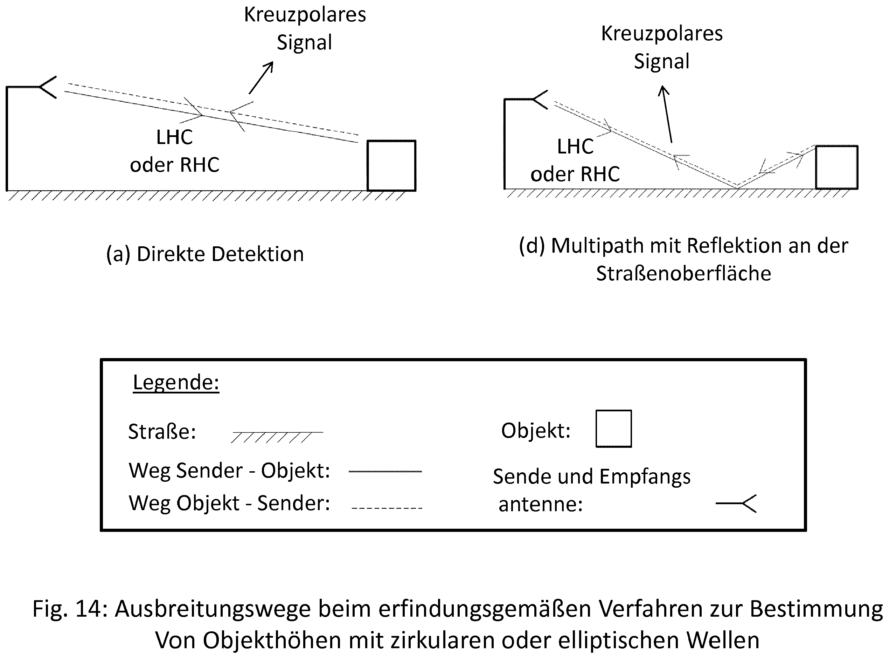

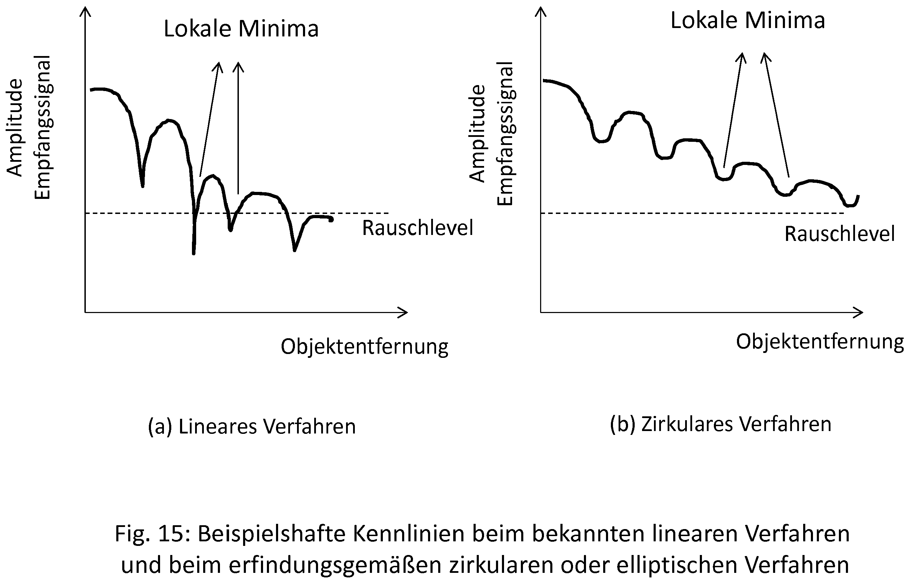

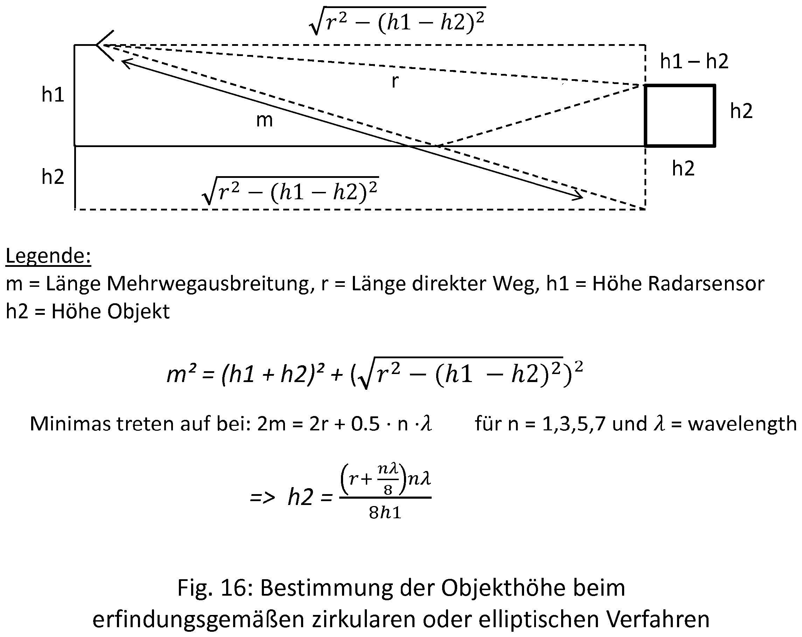

Bei der erfindungsgemäßen Methode von Objekthöhen werden zirkular oder elliptisch polarisierte Signale ausgesendet. Man sendet dabei entweder ein linksdrehend polarisiertes oder ein rechtsdrehend polarisiertes Signal aus und wertet aber ausschließlich das kreuzpolare Empfangssignal aus. Das kreuzpolare Signal bzw. das kopolare Signal bezeichnet dabei stets die auf das Sendesignal bezogene Polarisationsrichtung. Ist das Sendesignal z.B. eine linksdrehende Welle, so ist das kreuzpolare Empfangssignal rechtsdrehend und das kopolare Empfangssignal linksdrehend. Bei der alleinigen Auswertung des kreuzpolaren Empfangssignals entsprechend der erfindungsgemäßen Methode ergeben sich im Gegensatz zum bekannten Ansatz mit linear polarisierten Signalen nur zwei Ausbreitungswege, deren zurückreflektierten Signale sich im Empfänger überlagern. Die Ausbreitungswege bestehen aus einer direkten Detektion und einer Mehrwegeausbreitung, die eine zusätzliche Reflektion an der Straßenoberfläche beinhaltet. Bei diesen beiden Ausbreitungswegen gibt es eine ungerade Anzahl an Reflektionen und somit erscheint das Empfangssignal im kreuzpolaren Empfangskanal. Die bei der bekannten Methode mit linear polarisierten Signalen vorkommenden Rundwege gibt es im erfindungsgemäßen Verfahren nicht mehr, da diese Signale im kopolaren Empfangspfad auftreten, da die Anzahl an Reflektionen im Ausbreitungsweg gerade ist. Die im bekannten Verfahren lokal auftretenden stark ausgeprägten Minima, die bei bestimmten Entfernungen eine Objektdetektion verhindern, treten beim erfindungsgemäßen Verfahren nicht mehr auf und die Objekte können bei allen Entfernungen detektiert werden und die Höhe kann durch Auswertung von typischen Merkmalen wie z.B. zwei lokale Minima bei bestimmten Entfernungen erfolgen. Fig. 14 skizziert die Ausbreitungswege beim erfindungsgemäßen Verfahren zur Bestimmung der Objekthöhe. Fig. 15 zeigt typische charakteristische Kennlinien über der Entfernung beim bekannten Verfahren, sowie beim erfindungsgemäßen Verfahren. Hierbei ist hervorzuheben, dass die jeweiligen lokalen Minima grundsätzlich oberhalb des Rauschlevels liegen. Im Gegensatz hierzu sind die lokalen Minima beim bekannten Verfahren häufig unterhalb des Rauschlevels und somit schwer zu identifizieren. Fig. 16 zeigt die formelmäßigen Zusammenhänge zur Bestimmung der Objekthöhe.

Eine weitere Anwendung des anmeldungsgemäßen Verfahren und der anmeldungsgemäßen Vorrichtung besteht darin, den Reibwert von Straßenbelägen, vorzugsweise mittels Radarsensoren, zu bestimmen, wenn beispielsweise zusätzliche Reflektionen an der Straßenoberfläche gemessen werden.

Insbesondere wird beim hochautomatisierten bzw. autonomen Fahren eine vorausschauende Messung des Reibwertes des Straßenbelags benötigt. Die Messergebnisse erlauben die Feststellung von Geschwindigkeiten mit der z.B. eine Kurve sicher durchfahren werden kann, ohne dass die Gefahr besteht, dass das Fahrzeug abdriftet.

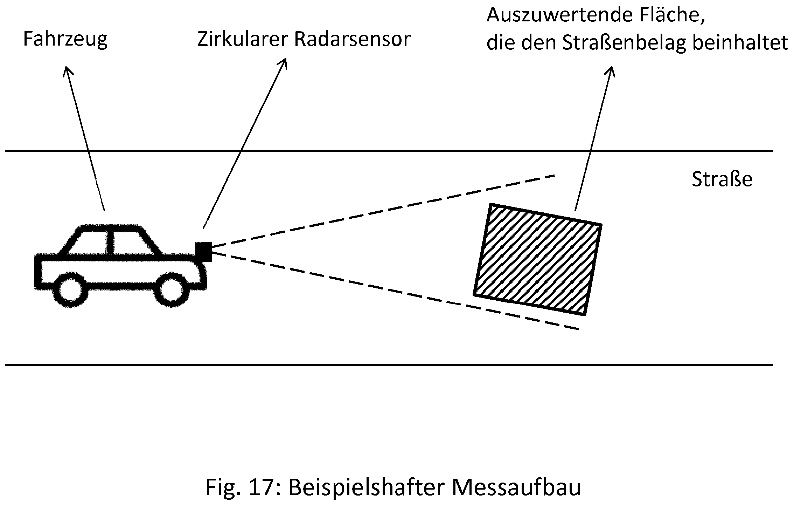

Für die Messung des Reibwertes wird ein zirkularer bzw. elliptisch polarisierter Radarsensor benötigt, der nach vorne gerichtet am Fahrzeug montiert ist und Bereiche der vor dem Fahrzeug liegenden Straßen- bzw. Bodenbelags flächig detektiert. Dieser Aufbau ist in Fig. 17 gezeigt.

Für die Reibwertbestimmung benötigt man folgende Vorgehensweise:
1. Berechnung der Lokalen Maxima für die ko- und kreuzpolarisierten zurückreflektierten Signale (links- und rechtsdrehende Signale)
2. Heraussuchen einer Fläche, die einen bestimmten Straßenbelag beinhaltet
3. Analyse aller Lokalen Maxima dieses Bereiches hinsichtlich folgender Eigenschaften
   - Amplitudenbetragsverhältnis zwischen ko- und kreuzpolaren Signalanteile
   - Phasendifferenz zwischen ko- und kreuzpolaren Signalanteilen
   - Amplitudenstärke und Polarisation der Lokalen Maxima

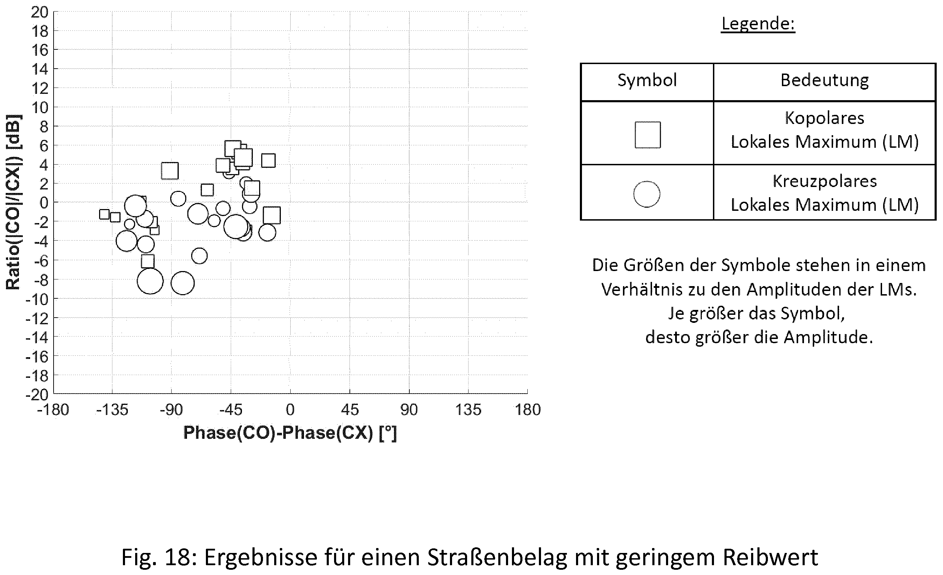

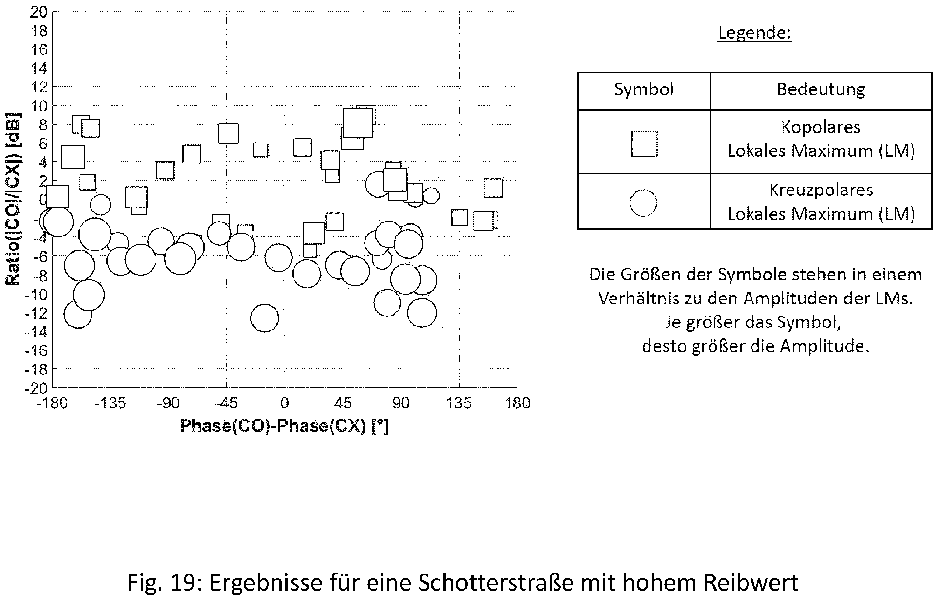

Zur Veranschaulichung bietet es sich hierbei an dieses Parameter in einer Grafik aufzutragen. In Fig. 18 sind als Beispiel die Ergebnisse für eine Straße mit einem Teerbelag, der eine geringe Rauigkeit aufweist, dargestellt und in Fig. 19 als Beispiel die Ergebnisse für eine Schotterstraße mit einer naturgemäß hohen Rauigkeit. Die y-Achse zeigt jeweils das Amplitudenbetragsverhältnis der ko- und kreuzpolaren Signalanteile und die x-Achse deren Phasendifferenz. Die kreuzpolaren Lokalen Maxima sind als Kreise und die kopolaren Lokalen Maxima als Rechtecke dargestellt. Die Größe der Kreise und der Rechtecke nimmt mit der Signalamplitude zu.

Der Reibwert der Straßenbeläge kann nun mittels folgender Eigenschaften bestimmt werden:
- Clusterbildung, Streuung
- Ausdehnung der Cluster
- Mittelwert der Phasendifferenzlagen der Cluster
- Mittelwert der Amplitudenbetragsverhältnisse der Cluster
- Standartabweichung der Phasendifferenzlagen der Cluster
- Standartabweichung der Amplitudenbetragsverhältnisse der Cluster
- Anzahl der Lokalen Maxima
- Signalamplitude der Lokalen Maxima

Gemäß Fig. 18 und Fig. 19 weisen Straßenbeläge mit geringem Reibwert im Vergleich zu einem Straßenbelag mit einem hohen Reibwert folgende Eigenschaften auf:
- Geringe Ausdehnung des Clusters
- Geringere Standartabweichung der Phasendifferenzen und
   Amplitudenbetragsverhältnisse
- Geringere Signalamplituden
- Geringere Anzahl an Lokalen Maxima

Bei einem geringen Reibwerten werden diese Eigenschaften durch eine ähnliche Ausprägung der Rückstreupunkte sowie einer ähnlichen Orientierung der Rückstreupunkte zum Sensor hervorgerufen. Bei sehr hohen Reibwerten hat man unterschiedlich ausgeprägte Rückstreupunkte, die unterschiedlich zum Sensor orientiert sind.

Des Weiteren erlaubt die Phasenlage der Cluster verschiedene Oberflächen genauer analysieren zu können wie z.B. Schnee-, Eis- oder mit laubbedeckte Flächen. Bei Wasserschichten auf der Straße werden die gesamten Radarsignale weggespiegelt und man kann diese mittels signalfreier Flächen im Radarbild, d.h. bei Fehlen eines Radarsignals, identifizieren und Aquaplaning Gefahrsituationen erkennen.

Vorteilhafte Weiterentwicklungen sind Gegenstände der abhängigen Ansprüche.

## Patentansprüche

1. Verfahren zur Objektklassifikation, welches folgende Schritte aufweist:
a. Bereitstellen eines elliptisch oder zirkular polarisierten Sendesignals, welches auf das zu klassifizierende Objekt gesendet wird,
b. Erzeugen eines ersten Radarbildes aus dem kopolar polarisierten Reflexionssignal und Erzeugen eines zweiten Radarbildes aus dem kreuzpolarisierten Reflexionssignal und
c. Vergleichen des ersten Radarbildes mit dem zweiten Radarbild als Basis für die Objektklassifikation,
**dadurch gekennzeichnet, dass**
zusätzlich zur Objektklassifikation die Höhe von Objekten bestimmt wird, indem ein auf einer Strasse befindliches Objekt bei verschiedenen Entfernungen detektiert und die Minima ausschließlich des auf das Sendesignal bezogenen kreuzpolaren Empfangssignalanteils in Abhängigkeit der Objektentfernung ausgewertet werden.

2. Verfahren nach Anspruch 1, wobei das Erzeugen des ersten und zweiten Radarbildes aus links- und/oder rechtszirkularen Signalanteilen erfolgt.

3. Verfahren nach Anspruch 1, wobei das Erzeugen des ersten und zweiten Radarbildes aus linear horizontalen und linear vertikalen Signalanteilen erfolgt.

4. Verfahren nach einem der Ansprüche 1 bis 3, wobei das Erzeugen des ersten und zweiten Radarbildes gleichzeitig, vorzugsweise mittels des Sendesignals, erfolgt und/oder vorzugsweise das Vergleichen anhand der Signaleigenschaften der lokalen Maxima der Reflexionssignale erfolgt und/oder vorzugsweise das Vergleichen anhand der Signaleigenschaften einzelner Zielbereiche des Objektes erfolgt und/oder vorzugsweise die Signaleigenschaften zumindest eines der folgenden Kriterien aufweist:
- Anzahl der kopolaren lokalen Maxima
- Anzahl der kreuzpolaren lokalen Maxima
- Betragsverhältnis zwischen Ko- und Kreuzpolarisation, vorzugsweise durchschnittliches Betragsverhältnis hiervon
- Maximales Betragsverhältnis zwischen Ko- und Kreuzpolarisation
- Minimales Betragsverhältnis zwischen Ko- und Kreuzpolarisation
- Phasenverhältnis zwischen Ko- und Kreuzpolarisation
- Lage von lokalen Maxima mit hohen oder mit niedrigen Betragsverhältnis zwischen Ko- und Kreuzpolarisation
- Geschwindigkeitsauswertung.

5. Verfahren nach einem der Ansprüche 1 bis 4, wobei Ähnlichkeitsmuster zur Objektklassifikation erstellt werden und/oder vorzugsweise weitere Unterobjektklassen vorgesehen sind, die zumindest bei einem das Sendesignal aussendenden Radarsensor aufgeteilt sind, in
- Abstand zum Radarsensor
- Winkelausrichtung zum Radarsensor
- Objektausrichtung zum Radarsensor
- Relativer Geschwindigkeit zum Radarsensor
und/oder vorzugsweise die Objektklassifikation sich auf die Lage- und Ausrichtungserkennung des Objektes, vorzugsweise eines PKW, bezieht und/oder vorzugsweise bei frontaler Objektbestimmung zumindest folgende Bereiche eines PKW ausgewertet werden, z.B. Frontbereich, vordere Radkästen, Lenkradbereich und/oder Außenspiegel.

6. Verfahren nach einem der Ansprüche 1 bis 5, wobei zeitlich versetzt eine linkszirkular polarisierte Welle und dann eine rechtszirkular polarisierte Welle oder zeitlich versetzt eine linksdrehende elliptische Welle und dann eine rechtsdrehende elliptische Welle von mindestens einer Sendeantenne ausgesendet werden und von den zurückreflektierten Signalen nur der linksdrehende oder der rechtsdrehende Signalanteil ausgewertet wird.

7. Verfahren nach einem der Ansprüche 1 bis 6, wobei bei Verwendung von mehreren Sendern die jeweils gleich polarisierten Wellen gleichzeitig und in der Phase kodiert abgesendet werden, so dass es eine Sendeabfolge gibt, die aus einer zeitgleichen Verwendung rechtsdrehend polarisierter Sendesignale und zeitlich versetzt, d.h. vorausgehend oder nachfolgend, aus einer zeitgleichen Verwendung linksdrehend polarisierter Sendesignale besteht.

8. Vorrichtung zur Festlegung einer Ohiektklassifikation insbesondere unter Verwendung des Verfahrens nach einem der Ansprüche 1 bis 7, wobei
a. Mittel zum Bereitstellen eines elliptisch oder zirkular polarisierten Sendesignals, welches auf das zu klassifizierende Objekt gesendet wird,
b. Mittel zum Erzeugen eines ersten Radarbildes aus dem kopolar polarisierten Reflexionssignal und zum Erzeugen eines zweiten Radarbildes aus dem kreuzpolarisierten Reflexionssignal und
c. Mittel zum Vergleichen des ersten Radarbildes mit dem zweiten Radarbild als Basis für die Objektklassifikation vorgesehen sind,
**dadurch gekennzeichnet, dass**
zusätzlich zur Objektklassifikation die Höhe von Objekten bestimmt wird, indem ein auf einer Strasse befindliches Objekt bei verschiedenen Entfernungen detektiert und die Minima ausschließlich des auf das Sendesignal bezogenen kreuzpolaren Empfangssignalanteils in Abhängigkeit der Objektentfernung ausgewertet werden.

9. Vorrichtung nach Anspruch 8, wobei Mittel zum Erzeugen des ersten und zweiten Radarbildes aus links- oder rechtszirkularen Signalanteilen vorgesehen sind.

10. Vorrichtung nach Anspruch 8, wobei Mittel zum Erzeugen des ersten und zweiten Radarbildes aus linear horizontalen und linear vertikalen Signalanteilen vorgesehen sind.

11. Vorrichtung nach einem der Ansprüche 8 bis 10, bei der das Erzeugen des ersten und zweiten Radarbildes gleichzeitig, vorzugsweise mittels des Sendesignals, erfolgt.

12. Vorrichtung nach einem der Ansprüche 8 bis 11, bei der das Vergleichen anhand der Signaleigenschaften der lokalen Maxima der Reflexionssignale erfolgt.

13. Vorrichtung nach Anspruch 12, bei der das Vergleichen anhand der Signaleigenschaften einzelner Zielbereiche des Objektes erfolgt und/oder vorzugsweise zeitlich versetzt eine linkszirkular polarisierte Welle und dann eine rechtszirkular polarisierte Welle oder zeitlich versetzt eine linksdrehende elliptische Welle und dann eine rechtsdrehende elliptische Welle von mindestens einer Sendeantenne ausgesendet werden und von den zurückreflektierten Signalen nur der linksdrehende oder der rechtsdrehende Signalanteil ausgewertet wird und/oder vorzugsweise bei Verwendung von mehreren Sendern die jeweils gleich polarisierten Wellen gleichzeitig und in der Phase kodiert abgesendet werden, so dass es eine Sendeabfolge gibt, die aus einer zeitgleichen Verwendung rechtsdrehend polarisierter Sendesignale und zeitlich versetzt, d.h. vorausgehend oder nachfolgend, aus einer zeitgleichen Verwendung linksdrehend polarisierter Sendesignale besteht.

14. Vorrichtung nach einem der Ansprüche von 8 bis 13, wobei zusätzlich zur Objektklassifikation der Reibwert eines Straßenbelags bestimmt wird, indem eine bestimmte Fläche des Straßenbelags zur Analyse herangezogen wird und deren lokale Maxima zumindest hinsichtlich einer der folgenden Eigenschaften ausgewertet werden:
- Clusterbildung, Streuung
- Ausdehnung der Cluster
- Mittelwert der Phasendifferenzlagen der Cluster
- Mittelwert der Amplitudenbetragsverhältnisse der Cluster
- Standartabweichung der Phasendifferenzlagen der Cluster
- Standartabweichung der Amplitudenbetragsverhältnisse der Cluster
- Anzahl der Lokalen Maxima
- Signalamplitude der Lokalen Maxima.

## Claims

1. A method for object classification which comprises the following steps:
a. providing an elliptically or circularly polarized transmission signal which is transmitted to the object to be classified,
b. generating a first radar image from the co-polarized reflection signal and generating a second radar image from the cross-polarized reflection signal, and
c. comparing the first radar image with the second radar image as a basis for the object classification,
**characterized in that**,
in addition to the object classification, the height of objects is determined by detecting an object located on a road at different distances and by evaluating the minima solely of the cross-polar reception signal component related to the transmission signal in dependence on the object distance.

2. A method according to claim 1, wherein the generation of the first and second radar image takes place from left-circular signal components and/or right-circular signal components.

3. A method according to claim 1, wherein the generation of the first and second radar image takes place from linearly horizontal and linearly vertical signal components.

4. A method according to any one of the claims 1 to 3, wherein the generation of the first and second radar image takes place simultaneously, preferably by means of the transmission signal, and/or preferably the comparison takes place using the signal properties of the local maxima of the reflection signals and/or preferably the comparison takes place using the signal properties of individual target regions of the object and/or preferably the signal properties have at least one of the following criteria:
- number of co-polar local maxima,
- number of cross-polar local maxima,
- magnitude ratio between co-polarization and cross-polarization, preferably average magnitude ratio thereof,
- maximum magnitude ratio between co-polarization and cross-polarization,
- minimum magnitude ratio between co-polarization and cross-polarization,
- phase relationship between co-polarization and cross-polarization,
- location of local maxima with a high or low magnitude ratio between co-polarization and cross-polarization,
- speed evaluation.

5. A method according to any one of the claims 1 to 4, wherein similarity patterns are created for an object classification and/or preferably further sub-object classes are provided that are divided, at least in the case of a radar sensor transmitting the transmission signal, into
- a distance from the radar sensor,
- an angular alignment with respect to the radar sensor,
- an object alignment with respect to the radar sensor,
- a relative speed with respect to the radar sensor,
and/or preferably the object classification relates to the position and orientation recognition of the object, preferably a passenger car, and/or preferably at least the following areas of a passenger car are evaluated in a frontal object determination, e.g. the front area, front wheel housings, steering wheel area and/or exterior mirrors.

6. A method according to any one of the claims 1 to 5, wherein a left-circularly polarized wave and then a right-circularly polarized wave are transmitted offset in time or a left-rotating elliptical wave and then a right-rotating elliptical wave are transmitted offset in time by at least one transmission antenna and, of the signals reflected back, only the left-rotating or the right-rotating signal component is evaluated.

7. A method according to any one of the claims 1 to 6, wherein, when using a plurality of transmitters, the respective identically polarized waves are transmitted simultaneously and phase-coded so that there is a transmission sequence which consists of a simultaneous use of right-rotating polarized transmission signals and, offset in time, i.e. preceding or following, of a simultaneous use of left-rotating polarized transmission signals.

8. An apparatus for defining an object classification in particular using the method according to any one of the claims 1 to 7, wherein
a. means for providing an elliptically or circularly polarized transmission signal which is transmitted to the object to be classified,
b. means for generating a first radar image from the co-polarized reflection signal and for generating a second radar image from the cross-polarized reflection signal, and
c. means for comparing the first radar image with the second radar image are provided as a basis for the object classification,
**characterized in that**,
in addition to the object classification, the height of objects is determined by detecting an object located on a road at different distances and by evaluating the minima solely of the cross-polar reception signal component related to the transmission signal in dependence on the object distance.

9. An apparatus according to claim 8, wherein means for generating the first and second radar image from left-circular or right-circular signal components are provided.

10. An apparatus according to claim 8, wherein means for generating the first and second radar image from linearly horizontal and linearly vertical signal components are provided.

11. An apparatus according to any one of claims 8 to 10, in which the generation of the first and second radar image takes place simultaneously, preferably by means of the transmission signal.

12. An apparatus according to any one of the claims 8 to 11, in which the comparison takes place using the signal properties of the local maxima of the reflection signals.

13. An apparatus according to claim 12, in which the comparison takes place using the signal properties of individual target regions of the object and/or preferably a left-circularly polarized wave and then a right-circularly polarized wave are transmitted offset in time or a left-rotating elliptical wave and then a right-rotating elliptical wave are transmitted offset in time by at least one transmission antenna and, of the signals reflected back, only the left-rotating or the right-rotating signal component is evaluated and/or, preferably when using a plurality of transmitters, the respective identically polarized waves are transmitted simultaneously and phase-coded so that there is a transmission sequence which consists of a simultaneous use of right-rotating polarized transmission signals and, offset in time, i.e. preceding or following, of a simultaneous use of left-rotating polarized transmission signals.

14. An apparatus according to any one of the claims of 8 to 13, wherein, in addition to the object classification, the friction coefficient of a road surface is determined by using a specific area of the road surface for analysis and by evaluating its local maxima at least with respect to at least one of the following properties:
- cluster formation, scattering,
- expansion of the clusters,
- mean value of the phase difference positions of the clusters,
- mean value of the amplitude magnitude ratios of the clusters,
- standard deviation of the phase difference positions of the clusters,
- standard deviation of the amplitude magnitude ratios of the clusters,
- number of local maxima,
- signal amplitude of the local maxima.

## Revendications

1. Procédé de classification d'objets, comprenant les étapes suivantes consistant à :
a. fournir un signal d'émission à polarisation elliptique ou circulaire, qui est émis vers l'objet à classifier,
b. générer une première image radar à partir du signal de réflexion à polarisation copolaire, et générer une deuxième image radar à partir du signal de réflexion à polarisation croisée, et
c. comparer la première image radar à la deuxième image radar, à titre de base pour la classification des objets,
**caractérisé en ce que**
outre la classification des objets, la hauteur des objets est déterminée par la détection d'un objet, situé sur une route, à différentes distances, et par l'évaluation des minima exclusivement de la composante de signal de réception à polarisation croisée, rapportée au signal d'émission, en fonction de la distance de l'objet.

2. Procédé selon la revendication 1,
dans lequel les première et deuxième images radar sont générées à partir des composantes de signal circulaires gauche et/ou droite.

3. Procédé selon la revendication 1,
dans lequel les première et deuxième images radar sont générées à partir des composantes de signal linéairement horizontales et linéairement verticales.

4. Procédé selon l'une des revendications 1 à 3,
dans lequel les première et deuxième images radar sont générées simultanément, de préférence à l'aide du signal d'émission, et/ou, de préférence, la comparaison est effectuée sur la base des propriétés de signal des maxima locaux des signaux de réflexion, et/ou, de préférence, la comparaison est effectuée sur la base des propriétés de signal des zones cibles individuelles de l'objet, et/ou, de préférence, les propriétés de signal comprennent au moins l'un des critères suivants :
- le nombre de maxima locaux copolaires,
- le nombre de maxima locaux à polarisation croisée,
- le rapport d'amplitude entre la copolarisation et la polarisation croisée, de préférence leur rapport d'amplitude moyen,
- le rapport d'amplitude maximal entre la copolarisation et la polarisation croisée,
- le rapport d'amplitude minimal entre la copolarisation et la polarisation croisée,
- le rapport de phase entre la copolarisation et la polarisation croisée,
- la localisation des maxima locaux présentant des rapports d'amplitude élevés ou faibles entre la copolarisation et la polarisation croisée,
- l'évaluation de la vitesse.

5. Procédé selon l'une des revendications 1 à 4,
dans lequel des motifs de similarité sont créés pour la classification des objets, et/ou, de préférence, d'autres sous-classes d'objets sont prévues, lesquelles sont subdivisées, au moins pour un capteur radar émettant le signal d'émission, en :
- une distance par rapport au capteur radar,
- une orientation angulaire par rapport au capteur radar,
- une orientation de l'objet par rapport au capteur radar,
- une vitesse relative par rapport au capteur radar,
et/ou, de préférence, la classification d'objets se rapporte à la détection de la position et de l'orientation de l'objet, de préférence d'une voiture, et/ou, de préférence, en cas de détermination frontale d'un objet, au moins les zones suivantes d'une voiture sont évaluées, par exemple : la zone avant, les passages de roue avant, la zone du volant et/ou les rétroviseurs extérieurs.

6. Procédé selon l'une des revendications 1 à 5,
dans lequel une onde à polarisation circulaire à gauche, suivie d'une onde à polarisation circulaire à droite, ou une onde elliptique tournant à gauche, suivie d'une onde elliptique tournant à droite, sont émises de façon décalée dans le temps par au moins une antenne émettrice, et seule la composante de signal tournant à gauche ou tournant à droite des signaux réfléchis est évaluée.

7. Procédé selon l'une des revendications 1 à 6,
dans lequel, en cas d'utilisation de plusieurs émetteurs, les ondes de polarisation respective identique sont émises simultanément et de façon codée en phase, de sorte qu'il existe une succession d'émission constituée d'une utilisation simultanée de signaux d'émission polarisés à droite et, avec décalage dans le temps, c'est-à-dire au préalable ou à la suite, d'une utilisation simultanée de signaux d'émission polarisés à gauche.

8. Dispositif de détermination d'une classification d'objets, utilisant en particulier le procédé selon l'une des revendications 1 à 7, dans lequel sont prévus :
a. des moyens pour fournir un signal d'émission à polarisation elliptique ou circulaire, qui est émis vers l'objet à classifier,
b. des moyens pour générer une première image radar à partir du signal de réflexion à polarisation copolaire et pour générer une deuxième image radar à partir du signal de réflexion à polarisation croisée, et
c. des moyens pour comparer la première image radar à la deuxième image radar, à titre de base pour la classification des objets,
**caractérisé en ce que**
outre la classification des objets, la hauteur des objets est déterminée par la détection d'un objet, situé sur une route, à différentes distances, et par l'évaluation des minima exclusivement de la composante de signal de réception à polarisation croisée, rapportée au signal d'émission, en fonction de la distance de l'objet.

9. Dispositif selon la revendication 8,
dans lequel sont prévus des moyens pour générer les première et deuxième images radar à partir des composantes de signal circulaires à gauche ou à droite.

10. Dispositif selon la revendication 8,
dans lequel sont prévus des moyens pour générer les première et deuxième images radar à partir des composantes de signal linéairement horizontales et linéairement verticales.

11. Dispositif selon l'une des revendications 8 à 10,
dans lequel les première et deuxième images radar sont générées simultanément, de préférence au moyen du signal d'émission.

12. Dispositif selon l'une des revendications 8 à 11,
dans lequel la comparaison est effectuée sur la base des propriétés de signal des maxima locaux des signaux de réflexion.

13. Dispositif selon la revendication 12,
dans lequel la comparaison est effectuée sur la base des propriétés de signal de zones cibles individuelles de l'objet, et/ou, de préférence, une onde à polarisation circulaire à gauche, suivie d'une onde à polarisation circulaire à droite, ou une onde elliptique tournant à gauche, suivie d'une onde elliptique tournant à droite sont émises de façon décalée dans le temps par au moins une antenne émettrice, et seule la composante de signal tournant à gauche ou tournant à droite des signaux réfléchis est évaluée, et/ou, de préférence, en cas d'utilisation de plusieurs émetteurs, les ondes à polarisation respective identique sont émises simultanément et de façon codée en phase, de sorte qu'il existe une succession d'émission constituée d'une utilisation simultanée de signaux d'émission polarisés à droite et, avec décalage dans le temps, c'est-à-dire au préalable ou à la suite, d'une utilisation simultanée de signaux d'émission polarisés à gauche.

14. Dispositif selon l'une des revendications 8 à 13,
dans lequel, outre la classification des objets, le coefficient de frottement d'un revêtement de chaussée est déterminé par l'analyse d'une zone spécifique du revêtement de chaussée et par l'évaluation de ses maxima locaux au moins par rapport à l'une des propriétés suivantes :
- la formation de clusters et la dispersion,
- l'étendue des clusters,
- la valeur moyenne des positions de déphasage des clusters,
- la valeur moyenne des rapports d'amplitude des clusters,
- l'écart type des positions de déphasage des clusters,
- l'écart type des rapports d'amplitude des clusters,
- le nombre de maxima locaux,
- l'amplitude de signal des maxima locaux.
